# EUROPEAN PATENT APPLICATION

(11) **EP 1 598 026 A1**
(43) Date of publication of application: **23.11.2005**
(21) Application number: 04015303.3
(22) Date of filing: 30.06.2004
(51) Int. Cl.: A61C 5/02

(54) **Root canal reamers for handpieces with reaming portions more than 16 mm long**

(30) Priority: 19.05.2004 IT PD20040128
(71) Applicant: Sweden & Martina S.p.a., 35020 Due Carrare (PD) (IT)
(72) Inventor: Malagnino, Vito Antonio, Dr., 35020 Due Carrare (Padova) (IT)
(74) Representative: Gustorf, Gerhard

(57) **Abstract**

The invention is a new root canal reamer for use in a handpiece, with two or more cutting blades and an increasing and constant taper angle, whose reaming section comes between 16 and 30 mm in length. Said reaming section is designed to operate not only on the apical portion of the root canal, but also - entirely or partially - on the coronal portion. This new root canal reamer can have variable taper angle and tip diameter, thus making it possible to obtain a complete kit.

## Description

The present patent relates to dental instruments and particularly concerns the root canal reamers commonly applied to micromotors and handpieces for use in endodontic treatment.

Currently existing root canal reamers are substantially composed of two or more cutting blades, forming one or more spirals and a radial plane, which reduces the self-tapping tendency of the apical tip inside the tooth.

These instruments are used to prepare a root canal for subsequent filling. Dental root canals are not usually straight and their apical portion is narrower than their coronal portion, so the root canal is conical in shape.

The material used to manufacture these instruments is steel or, preferably, nickel-titanium alloys.

For a long time now, endodontic instruments for preparing root canals have had different, non-standard tip diameters, tapers and reaming lengths. Rules (ISO standards) were established in 1955 that specified, among other things, that the global reaming length of all instruments should be 16 mm, regardless of the length of the instrument as a whole, which in fact varies and may be 21, 25 or 31 mm, depending on the different length of the teeth. What makes the total length of the instruments vary is the different length of the smooth coronal end of the reamer, however, not of the filing part.

Known root canal reamers always have an apical reaming portion 16 mm long and a smooth coronal portion of variable length.

As a result, the reaming action only comes to bear on the apical portion of the tooth, while the instrument has no effect on the coronal part of the tooth.

The coronal part of the tooth has to be suitably enlarged and smoothed first to facilitate the reamer's access to the apical portion of the tooth.

Nickel-titanium tools may have different tip diameters and tapers. The availability of different sizes enables the instruments to be used in different sequences. Almost all known sequences use the instruments so as to enlarge the coronal end of the root canal first, then progressively complete its preparation in the apical direction; this strategy goes by the name of crown-down preparation. To obtain this result, larger instruments (especially in terms of taper angle) are used first, followed by progressively narrower ones.

It would clearly be advantageous to have a reamer that is always capable of arriving down to the apical end of the root canal (thereby ensuring a continuity along the full length of the canal), but that is also able to perform a lateral cutting action at various levels in the canal, including the coronal portion, so as to ensure any curvature to be smoothed out and the coronal end of the canal to be enlarged (even to a greater degree than its own diameters) to facilitate a more apical penetration both of the reamer in question and of subsequent instruments, simultaneously acting on the apical part all the while.

The objective of the present invention is to have a root canal reamer capable of simultaneously processing both the apical and the coronal portions of the root canal.

Another objective is to reduce the number of steps needed to achieve an excellent coronal opening while also preparing the apical portions at the same time.

A further objective is to have a reamer that, used in combination with other instruments, enables a reduction in the number of preparatory steps, while nonetheless ensuring that a wide, optimal coronal enlargement is prepared.

These and other objectives are achieved by the new root canal reamer with a reaming portion more than 16 mm long, proportional to the length of the endodontic cavity being treated.

The latest-generation mechanical instruments, e.g. the Ni-Ti MTWO, have an excellent cutting capacity and can be used to work on an ample endodontic area. This cutting capacity can be exploited not only in the apical canal, but also in the coronal chamber.

This not only enables the operator to avoid having to take subsequent action with a specific instrument on the more coronal portion of the canal and with other instruments in the dental pulp chamber, thereby saving time and equipment, it also enables only the essential amount of material, no more and no less, to be removed at coronal level; in fact, the same reaming instrument whose tip cuts down towards the apical end of the canal also reams away any obstructions in the coronal portion.

The object of the present invention is a particularly flexible, new root canal reamer, with two or more cutting blades, the reaming part of which is more than 16 mm long and a kit comprising a set of said root canal reamers for use in a suitable, original sequence.

Said root canal reamer, which may have any suitable apical tip diameter, comprises a conical section, whose diameter increases further away from the tip, with a taper angle ranging from 1% to 8% and a length of 20-30 mm.

The resulting advantages are considerable, in that the root canal reamer is aggressive and effective, also reaming the coronal portion of the canal.

The new root canal reamer enables action to be taken with caution at the apical end of the canal (which is normally at greater risk should the instrument break), while effective action is simultaneously taken on the coronal end.

The new kit comprises four root canal reaming instruments, all with a reaming length greater than 16 mm, for use in the following sequence:
- the first root canal reamer, for use after reaching the apical end of the canal with a manual steel file no. 10, has a tip diameter of 10 and a 4% taper angle;
- the second root canal reamer has a tip diameter of 15 and a 5% taper angle;
- the third root canal reamer has a tip diameter of 20 and a 6% taper angle.
- the fourth root canal reamer has a tip diameter of 25 and a 6 or 7 % taper angle.

This part of the sequence forms the initial stage for gradually enlarging the entire root canal, working from the apex up to the crown.

Root canal preparation is then completed using larger instruments.

The characteristics of the new rot canal reamer will be better clarified by the following description, with reference to the drawings, attached as a not restrictive example.

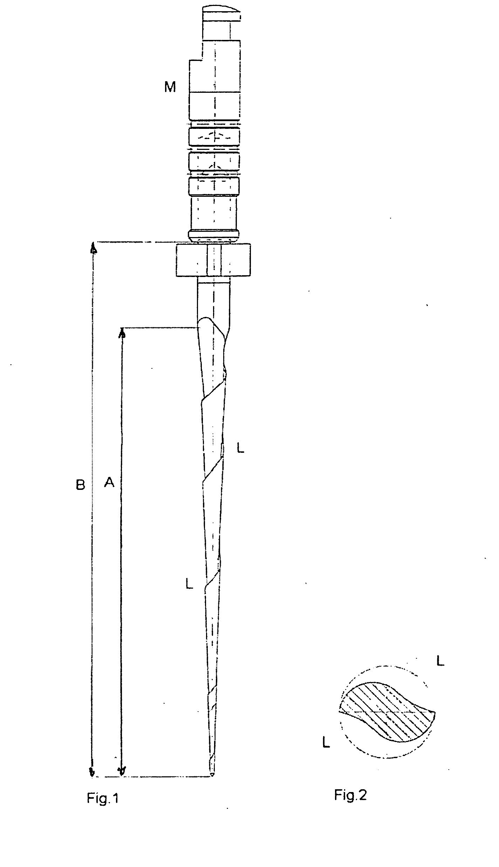

Figure 1 shows a view of the new root canal reamer, rotated by a motor and held by means of a handpiece (M). The instrument includes a conical part, complete with two cutting blades (L) arranged to form a spiral. These blades cover the instrument over a length (A) of 21 mm starting from the tip, thus enabling the reamer to operate not only in the apical area, but also in the coronal area. The length (A) of the reaming section comes between a minimum value of 16 mm and a maximum value corresponding to the full length of the instrument (B).

Figure 2 shows a cross section of said double-spiral portion, highlighting the profile of the blades (L) for reaming the inside of the root canal.

These are schematic details sufficient for an expert to implement the invention, therefore variants may be introduced in the practical application without this detracting from the substance of the innovative concept.

Therefore, with reference to the previous description and the attached drawings, the following claims are put forth.

## Claims

1. Root canal reamer for use in handpieces, with two or more cutting blades, with progressively increasing and constant taper angle, **characterized in that** the length of the reaming section comes between 16 and 30 mm, and wherein all or part of said reaming section is also effective on the coronal portion of the root canal.

2. Kit for use in dentistry, **characterized in that** it comprises the following root canal reamer instruments:
■ root canal reamer according to claim 1, with two cutting blades, a tip diameter of 10 and a taper angle of 4%;
■ root canal reamer according to claim 1, with two cutting blades, a tip diameter of 15 and a taper angle of 5%;
■ root canal reamer according to claim 1, with two cutting blades, a tip diameter of 20 and a taper angle of 6%;
■ root canal reamer according to claim 1, with two cutting blades, a tip diameter of 25 and a taper angle of 6 or 7%.
